# FASCICULE DE BREVET EUROPEEN

(11) **EP 1 482 091 B1**
(45) Date de publication et mention de la délivrance du brevet: **08.11.2006**
(21) Numéro de dépôt: 04291283.2
(22) Date de dépôt: 19.05.2004
(51) Int. Cl.: E01B 25/30

(54) **Ouvrage avec voie pour système de transport à sustentation magnétique et propulsion par moteur électrique linéaire**
Fahrwegkonstruktion für ein durch einen Linearmotor spürgeführtes Verkehrsystem für Magnetschwebefahrzeuge
Magnetic suspension track support for a transport system with linear motor propulsion

(30) Priorité: 23.05.2003 FR 0306280
(43) Date de publication de la demande: 01.12.2004
(73) Titulaire: ALSTOM, 92300 Levallois-Perret (FR); Systra, 75009 Paris (FR)
(72) Inventeur: Tutzauer, René, 78170 La Celle Saint Cloud (FR); Dutoit, Daniel, 92100 Boulogne (FR)
(74) Mandataire: Fréchède, Michel

(56) Documents cités:
- WO-A-03/013932
- DE-A- 2 148 941
- DE-B- 2 933 448
- JP-A- 60 133 101
- US-A- 5 231 931
- US-A1- 2002 162 479

## Description

L'invention concerne un système d'ouvrage avec voie pour système de transport à sustentation magnétique et propulsion par moteur électrique linéaire.

A l'heure actuelle, les ouvrages d'art (le viaduc) destinés à supporter les circulations de véhicules à sustentation magnétique et à propulsion par moteur électrique linéaire, sont réalisés en tronçons préfabriqués assemblés sur chantier ou coulés en place. Ces ouvrages d'art comportent des traverses, chacune supportée par une pile (ou pylône), qui reçoivent ensuite en superstructure une ou deux voies, posées sur des traverses servant à régler et maintenir les rails et à transmettre les efforts au viaduc.

Les viaducs existants sont réalisés pour constituer des ouvrages supports de voies de transport, mais jamais, dans les ouvrages routiers, et encore moins dans les ouvrages ferroviaires, la couche de roulement ou la voie ferrée ne participent à la résistance de l'ouvrage d'art sous l'effet des charges permanentes et d'exploitation.

Les ouvrages de systèmes de transport à sustentation magnétique et propulsion par moteur électrique linéaire existants respectent toujours ce principe de séparation des fonctions et des réactions. La voie supporte les efforts verticaux de sustentation, latéraux de guidage, et longitudinaux de traction freinage et les transmet au viaduc.

Le brevet HSST déposé aux Etats-Unis : US 5152227, fait état de dispositions de construction qui, ne portant pas sur l'intégration de ce qui semble être la voie dans la constitution de l'ouvrage, ne concerne pas cette particularité, et n'en fait pas mention. Un tel document ne permet pas de déduire l'intégration de la voie dans l'ensemble du viaduc.

Les ouvrages supports de monorails à traction par friction de roue, en général pneumatiques, ont un ouvrage jouant à la fois le rôle de la voie et du viaduc.

L'ouvrage HSST réalisé au japon est conçu sans écran latéraux, mais sa voie est conçue en deux parties, l'une constituée des traverses et des rails, qui ne font que reporter les efforts sur le corps du viaduc, l'autre du corps du viaduc intégrant donc l'élément résistant aux efforts exercés par les traverses.

De JP 60-133101 et de DE 248 941 il est connu un ouvrage d'art pour système de transport à sustentation magnétique associant au moins deux supports de voies en forme générale de T reliés entre eux pour former un ouvrage en forme générale de U.

L'invention a pour objet de proposer la simplification et l'optimisation de la conception, l'allégement des ouvrages, la facilitation de la construction, la réduction des appuis au sol, un système d'ouvrage avec voie pour système de transport à sustentation magnétique et propulsion par moteur électrique linéaire

Selon l'invention, l'ouvrage d'art avec voies est conforme à la revendication 1.

En outre, l'ouvrage d'art, objet de l'invention, intègre une succession de pylônes espacés longitudinalement et supportant ledit ouvrage en forme générale de U ou de V.

Enfin, l'ouvrage d'art objet de l'invention est remarquable en ce que les supports en forme générale de T sont à la fois constitutifs de la voie et font partie intégrante de la structure pour assurer le report des charges sur les piles.

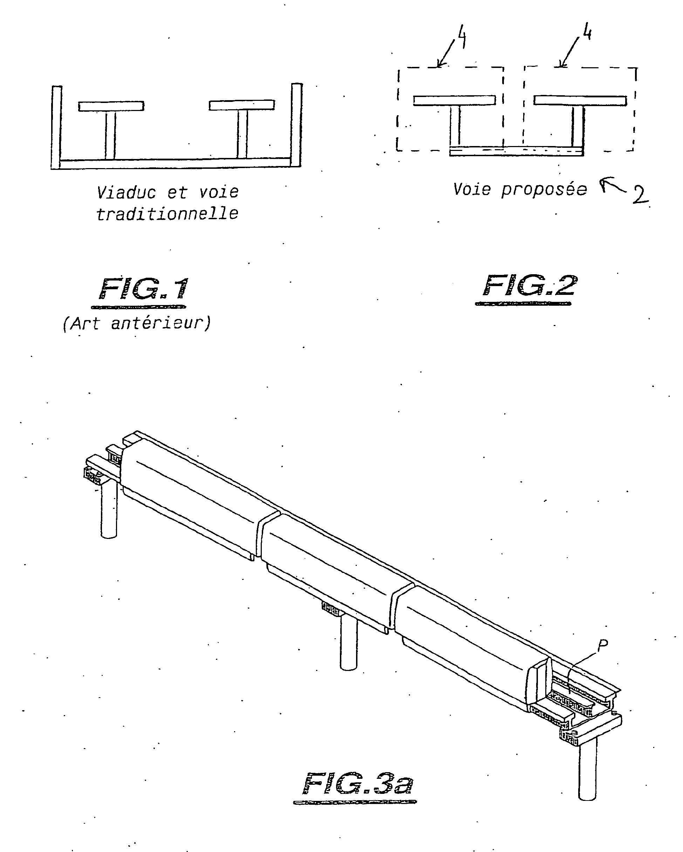

L'invention sera mieux comprise à la lecture de la description et à l'observation des dessins dans lesquels, outre la figure 1 représentant une vue en coupe d'une structure ou système d'ouvrage de l'art antérieur :
- la figure 2 représente une vue en coupe du système d'ouvrage selon l'invention ;
- la figure 3a représente, à titre illustratif, un train à sustentation magnétique utilisant un ouvrage avec voie conforme à l'objet de la présente invention ;
- la figure 3b représente, à titre illustratif, une vue partielle de la figure 3a, montrant la position relative du train à sustentation magnétique et de l'ouvrage d'art ;
- la figure 3c représente une vue plus détaillée de la figure 3b.

L'invention consiste à associer complètement le viaduc, les voies et les supports de voies, dans le cadre de l'application envisagée, en un seul ouvrage. Cet ouvrage dispose des caractéristiques suivantes :

Il associe au moins deux supports 4 de voies, chacune en forme générale de T, l'ensemble constituant un seul ouvrage monobloc en forme générale de U ou de V, où les barres verticales des T et celles du U ou du V sont confondues.

Les supports de voies etla base de l'ouvrage monobloc en forme générale de U ou de V constitue un ouvrage monobloc linéairement continu dans le sens des voies, de manière à être associés à la résistance générale de l'ouvrage.

L'ouvrage d'art ainsi constitué en une structure longitudinale unique, présente l'avantage fondamental de reporter les efforts sur les pylônes support de l'ouvrage.

L'ouvrage est réduit à une largeur limitée aux dimensions nécessaires au support des rails de réaction et de sustentation, aux distances de sécurité à prévoir entre les voies pour permettre le croisement des véhicules et éventuellement à la pose d'une passerelle centrale, par exemple une passerelle de secours et/ou de maintenance.

Les éléments de l'ouvrage sont coulés en place ou préfabriqués en usine avant d'être transportés sur le chantier pour être assemblés, en fonction du profil défini pour la ligne de transport à réaliser.

Les éléments préfabriqués sont munis sur les faces situées en interface avec les rails de réaction de dispositifs permettant de monter, de régler, de fixer ces rails en respectant le profil de la ligne.

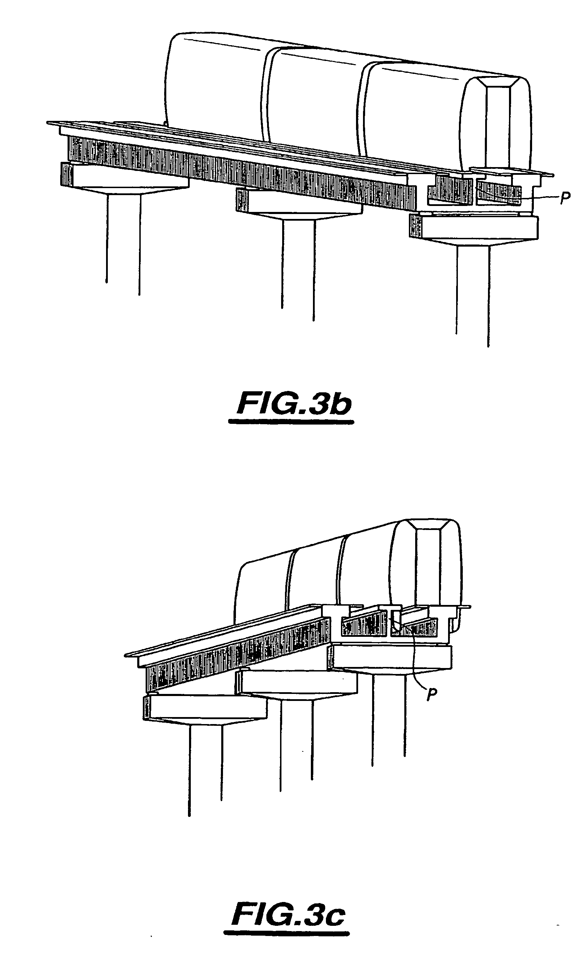

Sur les figures 3a à 3c, on a représenté la position relative d'un train à sustentation magnétique utilisant un ouvrage d'art avec ouvrage monobloc conforme à l'objet de l'invention.

Ainsi que représenté sur les figures précitées, l'ouvrage d'art avec voies peut avantageusement être muni d'une passerelle centrale P, passerelle de secours et/ou de maintenance, permettant, respectivement, d'accéder aux wagons du train ou d'évacuer les passagers de ces derniers, en cas de besoin. Cette passerelle centrale P peut, ainsi que représenté aux figures 3a à 3c, être placée au centre de l'ouvrage monobloc en forme générale de U ou de V au moins sur certaines parties de l'ouvrage d'art. Cette passerelle peut avantageusement faire partie intégrante de la structure.

Les avantages obtenus sont la simplification de la construction, la simplification de la pose de l'ouvrage et de la voie, l'allégement général y compris des appuis au sol.

Dans ce but, les supports de rail doivent être placés en usine dans le moule de chaque élément préfabriqué.

Les bouts d'éléments doivent être pré-orientés à la fabrication en usine, ce qui rend délicate la fabrication d'éléments personnalisés.

La variante par utilisation d'un joint à régler sur chantier enlève cet inconvénient mais renchérit à priori la solution.

## Revendications

1. Ouvrage d'art avec voies pour système de transport à sustentation magnétique et propulsion par moteur électrique linéaire, associant au moins deux supports (4) de voies en forme générale de T, lesdits supports (4) de voies étant chacun un élément linéairement continu dans le sens des voies et étant reliés entre eux pour former un ouvrage en forme générale de U, les barres verticales des supports (4) de voies en forme générale de T constituant les barres verticales de l'ouvrage en forme générale de U, **caractérisé en ce que** la base de l'ouvrage reliant entre eux lesdits supports (4) de voies en forme générale de T est également un élément linéairement continu dans le sens des voies, ledit ouvrage en forme générale de U constituant un ouvrage monobloc linéairement continu dans le sens des voies, de manière à ce que ladite base de l'ouvrage monobloc en forme générale de U participe à la résistance générale dudit ouvrage d'art.

2. Ouvrage d'art avec voies pour système de transport à sustentation magnétique et propulsion par moteur électrique linéaire, associant au moins deux supports (4) de voies en forme générale de T, lesdits supports (4) de voies étant chacun un élément linéairement continu dans le sens des voies et étant reliés entre eux pour former un ouvrage en forme générale de V, les barres verticales des supports (4) de voies en forme générale de T constituant les barres verticales de l'ouvrage en forme générale de V, **caractérisé en ce que** la base de l'ouvrage reliant entre eux lesdits supports (4) de voies en forme générale de T est également un élément linéairement continu dans le sens des voies, ledit ouvrage en forme générale de V constituant un ouvrage monobloc linéairement continu dans le sens des voies, de manière à ce que ladite base de l'ouvrage monobloc en forme générale de V participe à la résistance générale dudit ouvrage d'art.

3. Ouvrage d'art selon la revendication 1 ou 2, dans lequel ledit ouvrage d'art intègre une succession de pylônes espacés longitudinalement et supportant ledit ouvrage.

4. Ouvrage d'art selon l'une quelconque des revendications précédentes, **caractérisé en ce que** les supports (4) de voies en forme générale de T sont à la fois constitutifs de la voie et font partie intégrante de la structure pour assurer le report des charges sur les pylônes.

5. Ouvrage d'art selon l'une des revendications 1 à 4, **caractérisé en ce qu'**il comporte en outre une passerelle (P) placée au centre de l'ouvrage monobloc.

6. Ouvrage d'art selon la revendication 5, **caractérisé en ce que** la passerelle (P) fait partie intégrante de la structure.

## Claims

1. Engineering structure with tracks for a magnetic lift and linear electric motor propulsion transport system, which links at least two supports (4) which have the general shape of a T, with the said track supports (4) each forming a continuous linear element in the direction of the tracks and being connected to each other to form a structure which has the general shape of a U, with the vertical bars of the track supports (4) which have the general shape of a T forming the vertical bars of the structure which has the general shape of a U, **characterised by** the fact that the base of the structure which connects together the said track supports (4) which have the general shape of a T is also a continuous linear element in the direction of the tracks, with the said structure which has the general shape of a U forming a single-piece continuous linear structure in the direction of the tracks, such that the said base of the single-piece structure which has the general shape of a U contributes to the overall strength of the said engineering structure.

2. Engineering structure with tracks for a magnetic lift and linear electric motor propulsion transport system, which links at least two supports (4) which have the general shape of a T, with the said track supports (4) each forming a continuous linear element in the direction of the tracks and being connected to each other to form a structure which has the general shape of a V, with the vertical bars of the track supports (4) which have the general shape of a T forming the vertical bars of the structure which has the general shape of a V, **characterised by** the fact that the base of the structure which connects together the said track supports (4) which have the general shape of a T is also a continuous linear element in the direction of the tracks, with the said structure which has the general shape of a V forming a single-piece continuous linear structure in the direction of the tracks, such that that the said base of the single-piece structure which has the general shape of a V contributes to the overall strength of the said engineering structure.

3. Engineering structure as described in claim 1 or 2, in which the said engineering structure includes a succession of towers spaced longitudinally and which support the aforementioned engineering structure.

4. Engineering structure as described in any of the preceding claims whatsoever, **characterised by** the fact that the track supports (4) which have the general shape of a T both form part of the track and form an integral part of the structure to ensure that loads are transferred to the towers.

5. Engineering structure as described in any of claims 1 to 4, **characterised by** the fact that it includes, in addition, a gangway (P) located at the centre of the single-piece engineering structure.

6. Engineering structure as described in claim 5, **characterised by** the fact that the gangway (P) forms an integral part of the structure.

## Patentansprüche

1. Ingenieurbauwerk mit Gleisen für ein Magnetschwebe-Transportsystem mit Antrieb durch elektrischen Linearmotor, das mindestens zwei im Wesentlichen T-förmige Gleisträger (4) verbindet, wobei die genannten Gleisträger (4) jeweils ein in Richtung der Gleise linear ununterbrochenes Teil sind und miteinander verbunden sind, um ein im Wesentlichen U-förmiges Werk zu bilden, wobei die vertikalen Streben der im Wesentlichen T-förmigen Gleisträger (4) die vertikalen Streben des im Wesentlichen U-förmigen Werkes bilden, **dadurch gekennzeichnet, dass** die Basis des Werkes, die die genannten im Wesentlichen T-förmigen Gleisträger (4) verbindet, ebenfalls ein in Richtung der Gleise linear ununterbrochenes Teil ist, wobei das genannte im Wesentlichen U-förmige Werk ein in Richtung der Gleise linear ununterbrochenes, einstückiges Werk bildet, derart, dass die genannte Basis des einstückigen, im Wesentlichen U-förmigen Werkes zur allgemeinen Festigkeit des genannten Ingenieurbauwerkes beiträgt.

2. Ingenieurbauwerk mit Gleisen für ein Magnetschwebe-Transportsystem mit Antrieb durch elektrischen Linearmotor, das mindestens zwei im Wesentlichen T-förmige Gleisträger (4) verbindet, wobei die genannten Gleisträger (4) jeweils ein in Richtung der Gleise linear ununterbrochenes Teil sind und miteinander verbunden sind, um ein im Wesentlichen V-förmiges Werk zu bilden, wobei die vertikalen Streben der im Wesentlichen T-förmigen Gleisträger (4) die vertikalen Streben des im Wesentlichen V-förmigen Werkes bilden, **dadurch gekennzeichnet, dass** die Basis des Werkes, die die genannten im Wesentlichen T-förmigen Gleisträger (4) verbindet, ebenfalls ein in Richtung der Gleise linear ununterbrochenes Teil ist, wobei das genannte im Wesentlichen V-förmige Werk ein in Richtung der Gleise linear ununterbrochenes, einstückiges Werk bildet, derart, dass die genannte Basis des einstückigen, im Wesentlichen V-förmigen Werkes zur allgemeinen Festigkeit des genannten Ingenieurbauwerkes beiträgt.

3. Ingenieurbauwerk nach Patentanspruch 1 oder 2, in dem das genannte Ingenieurbauwerk eine Reihe von in Längsrichtung beabstandeten Pylonen, die das genannte Bauwerk tragen, umfasst.

4. Ingenieurbauwerk nach irgendeinem der vorangehenden Patentansprüche, **dadurch gekennzeichnet, dass** die im Wesentlichen T-förmigen Gleisträger (4) gleichzeitig das Gleis bilden und Grundbestandteil der Struktur sind, um die Übertragung der Belastungen auf die Pylonen sicherzustellen.

5. Ingenieurbauwerk nach irgendeinem der Patentansprüche 1 bis 4, **dadurch gekennzeichnet, dass** es außerdem einen Laufsteg (P) aufweist, der in der Mitte des einstückigen Werkes angeordnet ist.

6. Ingenieurbauwerk nach Patentanspruch 5, **dadurch gekennzeichnet, dass** der Laufsteg (P) Grundbestandteil der Struktur ist.
